Europäisches Patentamt

European Patent Office

Office européen des brevets

(19)

(11) Numéro de publication: **0 170 310**
**B1**

(12)

# FASCICULE DE BREVET EUROPEEN

(45) Date de publication du fascicule du brevet:
**30.03.88**

(21) Numéro de dépôt: **85201047.9**

(22) Date de dépôt: **01.07.85**

(51) Int. Cl.⁴: **H 01 J 29/24**

(54) **Ecran cathodoluminescent incrusté à cavités restaurées et tube de visualisation utilisant un tel écran.**

(30) Priorité: **03.07.84 FR 8410510**

(43) Date de publication de la demande:
**05.02.86 Bulletin 86/6**

(45) Mention de la délivrance du brevet:
**30.03.88 Bulletin 88/13**

(84) Etats contractants désignés:
**DE FR GB IT**

(56) Documents cités:
**US - A - 3 445 273**

(73) Titulaire: **Laboratoires d'Electronique et de Physique Appliquée L.E.P., 3, Avenue Descartes, F-94450 Limeil-Brévannes (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **DE GB IT**

(72) Inventeur: **Duchenois, Valère Société Civile S.P.I.D., 209, rue de l'Université, F-75007 Paris (FR)**
Inventeur: **Fouassier, Michèle Société Civile S.P.I.D., 209, rue de l'Université, F-75007 Paris (FR)**
Inventeur: **Baudry, Hugues Société Civile S.P.I.D., 209, rue de l'Université, F-75007 Paris (FR)**

(74) Mandataire: **Landousy, Christian et al, Société Civile S.P.I.D. 209, Rue de l'Université, F-75007 Paris (FR)**

## Description

L'invention concerne un écran cathodoluminescent incrusté comprenant une plaque de fibres optiques formée par la réunion de fibres optiques élémentaires constituées de barreaux de verre de coeur entourés par un ou plusieurs verres d'enrobage, la plaque de fibres optiques étant munie de cavités disposées sensiblement perpendiculairement à une de ses faces, les cavités étant obtenues après avoir creusé partiellement un ou plusieurs verres, dont le verre de coeur, tout en conservant au moins le verre d'enrobage le plus éloigné du verre de coeur, les surfaces ainsi à nu constituant les parois des cavités pour la partie sensiblement parallèle à l'axe des fibres optiques élémentaires, et le fond de ces cavités pour la partie restante, les cavités étant ensuite remplies par un produit cathodoluminescent émettant un flux lumineux sous l'influence d'un bombardement d'électrons.

Elle concerne également un tube de visualisation tel qu'un tube intensificateur d'images utilisé, par exemple, en vision nocturne, ou bien un tube à balayage de fente, ou bien un tube convertisseur de rayons X, ou bien un tube à rayons cathodiques permettant la visualisation d'une image, tels que ceux utilisés en oscilloscopie ou en télévision, ou, d'une manière générale, tout tube permettant la visualisation à l'aide du bombardement d'un luminophore par des électrons.

Un écran de ce type est décrit dans l'article intitulé «High modulation transfer function (MTF) phosphor screens» de J.R. PIEDMONT et H.K. POLLEHN publié dans SPIE Vol. 99 Third European Electro-Optics Conference (1976) pages 155 à 161. Cet écran incrusté est constitué d'une plaque de fibres optiques, chaque fibre étant formée d'un verre de coeur entouré d'un verre d'enrobage. Dans une structure antérieure, le matériau cathodoluminescent était déposé directement sur la plaque de fibres optiques et il se produisait une dispersion latérale de lumière limitant le contraste de l'image et par là même les performances du système. Aussi ces auteurs proposent-ils un écran incrusté comportant la plaque de fibres optiques précédente, mais dans laquelle le verre de coeur a été enlevé sur une petite profondeur afin de former des cavités. Celles-ci ont pour paroi le verre d'enrobage et pàour fond la surface de verre de coeur, préalablement attaqué par une solution chmique qui a dissout sélectivement le verre de coeur. Ces cavités ont une profondeur habituellement de l'ordre de quelques micromètres ou de quelques dizaines de micromètres, ceci résultant d'un compromis entre la largeur des cavités, la dimension des grains de matériau cathodoluminescent et l'énergie du rayonnement incident. Les parois internes de chaque cavité doivent être métallisées afin d'éviter que la lumière émise par une cavité puisse passer dans la cavité d'une fibre voisine. Ces cavités sont ensuite remplies d'un matériau cathodoluminescent. Comme pour les écrans conventionnels, une pellicule d'aluminium est déposée au-dessus des grains de matériau cathodoluminescent, fermant ainsi optiquement chaque cavité et fixant électriquement le potentiel de l'écran.

L'écran ainsi constitué est utilisé dans un tube de visualisation dans lequel un flux d'électrons vient exciter le matériau cathodoluminescent. Chaque cavité fonctionne comme une enceinte quasi fermée, et par la même, la lumière émise dans chaque cellule ne peut se propager que dans le verre de coeur.

Cette diminution de la dispersion de la lumière émise constitue l'avantage essentiel de l'écran à fibres optiques incrusté. Ceci conduit donc à une amélioration de la fonction de transfert de modulation qui caractérise cette dispersion. Il apparaît à l'usage que cette amélioration de la fonction de transfert de modulation s'accompagne d'une diminution de la quantité de lumière récupérée à l'autre extrémité de la plaque de fibres optiques.

Le but de l'invention est donc tout en conservant l'amélioration de la fonction de transfert de modulation, d'accroître la quantité de lumière récupérée à l'autre extrémité de la plaque de fibres optiques.

Pour cela l'invention telle que définie dans le préambule est remarquable en ce que le fond des cavités est recouvert d'un dépôt d'un matériau de restauration transparent au flux lumineux améliorant l'état de surface et la planéité du fond des cavités, et tendant à réduire au maximum le congé à l'intersection entre le fond et la paroi de chaque cavité.

En effet, toute la lumière qui est émise dans chaque cavité n'apparaît pas sur la face de sortie de la plaque de fibres optiques. Il est apparu après des observations par microscopie électronique à balayage que la forme de l'état de surface de chaque cavité, après le processus d'attaque chimique, était responsable de cette perte de quantité de lumière. Le mécanisme d'attaque chimique conduit à une profondeur d'attaque beaucoup plus accentuée à la frontière entre le verre de coeur et le verre d'enrobage. Il en résulte que le fond des cavités a généralement une forme tronconique, la profondeur de la faille périphérique étant plus importante que la profondeur moyenne d'une cavité.

Cette forme de cavité, compte tenu des angles d'incidence de la lumière, conduit à une perte de lumière importante due à un mauvais couplage optique entre la cavité émettrice et le guide de lumière. D'autre part, l'attaque chimique du verre de coeur provoque un état de surface dépoli qui constitue alors un milieu diffusant. Ce phénomène entraîne une perte de lumière supplémentaire du fait que les rayons entrant dans le verre de coeur ne sont pas propagés par réflexion totale dans chaque fibre élémentaire. De plus, la lumière qui ne pénètre pas dans le verre de coeur, est réfléchie et est en partie absorbée dans la cavité émettrice.

C'est pour assurer un transfert optimal vers le verre de coeur, du flux lumineux produit par le matériau cathodoluminescent, que l'invention utilise un matériau de restauration qui améliore l'état de surface et la planéité du fond des cavités. Ce matériau recouvre les irrégularités de surface et comple la faille périphérique. Mais il est nécessaire de restituer à la cavité la forme d'un cylindre sensiblement droit, forme optimale recherchée. Pour cela le congé qui apparaît à l'intersection entre le fond et la paroi de chaque cavité est réduit au maximum, de sorte que la surface du fond de la cavité est pratiquement égale à la surface d'une section droite de la cavité dans la partie évidée.

Pour que le transfert de lumière soit optimal, il est souhaitable que le matériau de restauration possède un indice optique voisin de celui du verre de coeur.

Selon une première variante le matériau de restauration est un émail dont la température de ramollissement est inférieure à la plus faible des températures de ramollissement des verres constituant la plaque de fibres optiques, afin de ne pas endommager celle-ci lors du processus de restauration. Pour fabriquer des écrans incrustés selon l'invention, on utilise généralement des plaques de fibres optiques pour lesquelles le verre qui a la plus basse température de ramollissement est le verre d'enrobage. Des émaux possédant un indice optique et une température de ramollissement en accord avec les deux points déjà énoncés sont ceux formés à partir des produits suivants pour des compositions molaires telles que:

PbO: a = 40 à 70% – SiO$_2$: b = 5 à 30% – Al$_2$O$_3$: c = 0 à 10% – B$_2$O$_3$: d = 10 à 35% – ZnO: e = 0 à 15% – Bi$_2$O$_3$: f = 0 à 3%, les produits étant mélangés de telle sorte que l'on ait: a + b + c + d + e + f = 100%.

Plus particulièrement l'émail de composition: PbO: 60%; B$_2$O$_3$: 25%; SiO$_2$: 10%; ZnO: 4%; Al$_2$O$_3$: 1% a donné des résultats satisfaisants.

Selon une seconde variante, la matériau de restauration est constitué d'un mélange de phosphate d'aluminium et de phosphate de titane. Les proportions peuvent se situer dans des compositions molaires approchant les valeurs suivantes:

Phosphate d'aluminium: 25%

Phosphate de titane: 75%.

L'invention sera mieux comprise à l'aide de la description suivante accompagnée de dessins qui représentent:

fig. 1 une vue en coupe d'un tube intensificateur d'images pour vision nocturne,

fig. 2 selon l'art antérieur, une vue en coupe d'un élément de fibres optiques avec sa cavité remplie d'un matériau cathodoluminescent,

fig. 3 une vue analogue à celle de la fig. 2 où certains trajets de rayons lumineux perdus sont représentés,

fig. 4 selon l'invention une vue en coupe d'un élément de fibres optiques avec le fond de sa cavité munie d'un revêtement d'un matériau de restauration, fig. 5 une vue analogue à celle de la fig. 4 avec en outre le matériau cathodoluminescent.

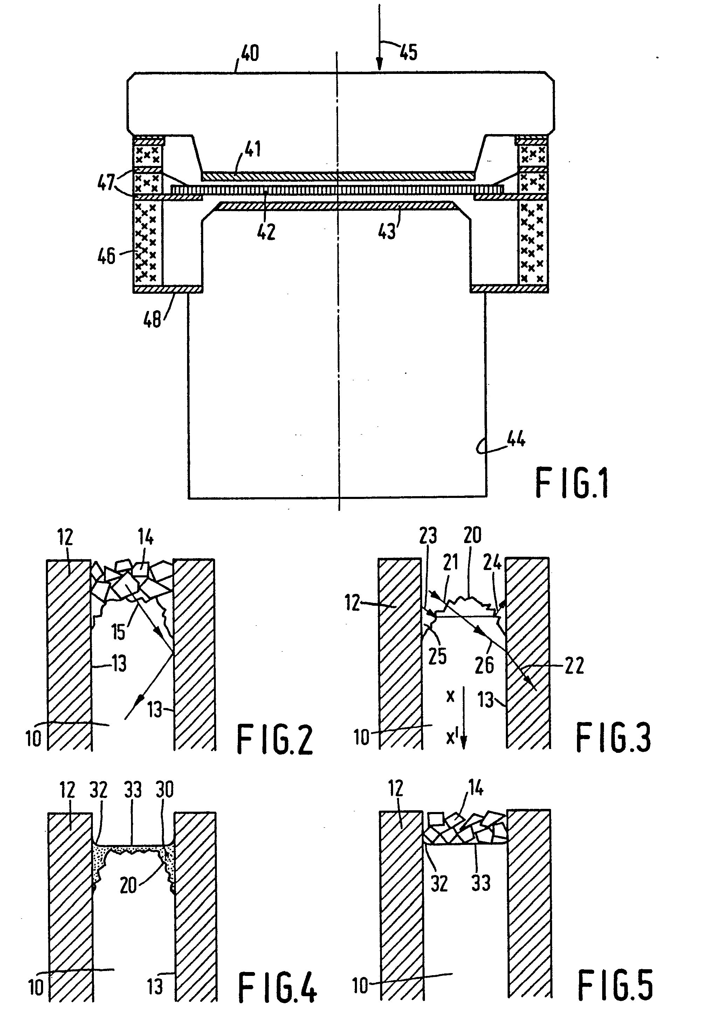

Pour définir l'invention considérons dans l'ensemble des tubes de visualisation où s'applique l'invention, un exemple particulier, constitué par un tube intensificateur d'images pour vision nocturne tel que représenté sur la fig. 1. Ce tube comprend une fenêtre d'entrée 40 traversée par le rayonnement incident 45. Celui-ci, par l'intermédiaire de la photocathode 41, donne naissance à un flux d'électrons qui est intensifié par la plaque de microcanaux 42. Ce flux densifié d'électrons vient frapper l'écran incrusté à cavités restaurées 43 réalisé en surface de la fenêtre à fibres optiques de sortie 44. Les fenêtres d'entrée et de sortie sont maintenues solidaires, d'une manière étanche au vide, à l'aide d'une rondelle métallique 48 et d'une bague isolante 46 en céramique à travers laquelle passent des moyens d'application de potentiels électriques 47 pour la plaque de microcanaux.

L'invention concerne l'écran incrusté à cavités restaurées 43. Pour le décrire isolons, préalablement selon l'art antérieur, un élément de fibre optique représenté sur la fig. 2. Cet élément est constitué d'un verre de coeur 10, d'un verre d'enrobage 12 et de grains de matériau cathodoluminescent 14 remplissant la cavité. Ce matériau, sous l'action d'un bombardement électronique, émet de la lumière par exemple le rayon 15, qui va traverser l'élément de fibres optiques en étant confiné dans le verre de coeur 10 du fait de la réflexion totale sur l'interface 13.

Le passage de la lumière d'un grain de matériau cathodoluminescent au verre de coeur est précisé sur la fig. 3, dans le cas de rayons lumineux perdus. La surface d'attaque 20 du fond de la cavité possède de fortes irrégularités. On a constaté que l'attaque chimique s'opérait très différemment sur le bord et au centre du fond de la cavité. Il en résulte que la surface d'attaque 20 présente généralement une forme d'aspect tronconique qui laisse apparaître une faille périphérique 25 tout autour du fond de la cavité.

Un élément de fibre optique classique possède généralement un verre de coeur ayant une largeur moyenne d'ouverture pouvant aller de 2 μm à 5 μm environ. Les cavités qui y sont creusées ont une profondeur de l'ordre de 2 μm × 5 μm. Les failles périphériques que l'on observe dans chaque cavité ont généralement une profondeur moyenne de 5 μm à 10 μm mesurée entre le fond de la faille et la partie centrale du fond de la cavité.

D'autre part, la surface d'attaque proprement dite présente une multitude d'irrégularités de surfaces produisant un dépoli. Or, ce sont ces irrégularités de surface de ces failles périphériques qui nuisent à un bon transfert du flux lumineux entre le grain de matériau cathodoluminescent et le verre de coeur.

Par exemple, si l'on considère un premier rayon incident 21 qui rencontre la surface irrégulière du verre de coeur, ce rayon wa se réfracter, donner naissance au rayon réfracté 26 qui va arriver à l'interface 13 sous un angle tel qu'il ne pourra subir de réflexion totale mais passera dans le verre d'enrobage 12 comme le montre le premier rayon perdu 22. Il finira, après passages successifs à travers les différentes fibres, par être absorbé par une fibre spéciale d'absorption («extra mural absorbing fibre» en langue anglaise), et donc sera perdu. De la même façon, un second rayon incident 23 arrivant sur la faille périphérique va se réfracter puis retourner vers la cavité suivant le second rayon perdu 24. Dans ces deux cas les rayons lumineux ne seront pas transmis par réflexion totale dans le verre de coeur 10. Il en résulte globalement une perte de flux lumineux sur la face de sortie de la plaque de fibres optiques située dans la direction XX' indiquée sur la fig. 3.

C'est pour supprimer l'effet de ces irrégularités de surface que l'invention utilise un matériau de restauration assurant la continuité optique le long de la surface d'attaque 20.

Pour cela selon la fig. 4, le matériau de restauration 30 est déposé sur la surface d'attaque 20 afin de combler la faille périphérique et de supprimer l'effet des irrégularités de surface. On obtient ainsi un fond central 33 de la cavité restaurée où les irrégularités de surface ont pratiquement disparu. De même, la faille périphérique 25 qui était représenté sur la fig. 3, se trouve comblée par le matériau de restauration 30, et laisse place à un léger congé 32 sur la périphérie de la cavité restaurée, l'influence de ce congé étant très faible sur la propagation de la lumière.

Il faut en effet réduire ce congé au maximum pour limiter son influence néfaste, et se rapprocher le plus possible d'un fond central 33 de la cavité restaurée le plus plan possible et coupant sensiblement perpendiculairement le cylindre formé par les parois de la cavité. En effet, si le congé devient trop important (c'est-à-dire ayant un rayon de courbure élevé), les rayons lumineux arrivant sur cette zone risquent d'atteindre l'interface 13 sous un angle tel qu'ils ne subiront pas de réflexion totale, donc seront perdus.

Pour déposer le matériau de restauration 30 constitué d'un émail on opère de la façon suivante. Les produits constitutifs de l'émail sont mélangés selon les proportions requises. Ainsi pour un émail d'indice optique de 1,9, on utilise la composition molaire suivante: PbO: 60%; $B_2O_3$: 25%; $SiO_2$: 10%; ZnO: 4%; $Al_2O_3$: 1%. Sa température de ramollissement permet d'effectuer l'opération d'émaillage à la température de nappage de 500°C, température à laquelle l'émail possède une fluidité suffisante pour bien napper la surface à traiter. Le mélange obtenu est fondu durant 3 heures à 1000°C en creuset de platine pour former l'émail. Celui-ci est alors finement broyé puis tamisé. La poudre obtenue est mise en suspension dans une solution d'eau désionisée et de silicate de potassium filtrée à 0,45 µm. Cette suspension est alors déposée par centrifugation dans les cavités préalablement creusées dans la plaque de fibres optiques, l'attaque étant effectuée selon la méthode connue constituant à dissoudre le verre de coeur à l'aide d'acide chlorhydrique pur à la température de 20°C pendant une durée de 45 minutes environ. L'opération de dépôt de l'émail par centrifugation s'effectue par exemple pendant 5 minutes à 2900 tours/minute, le surplus d'émail en surface étant enlevé par exemple à l'aide d'un pinceau. Dans le cas de la composition d'émail indiquée, on effectue alors la fusion de l'émail en mettant pendant 30 minutes la plaque de fibres optiques dans un four porté à 550°C.

L'écran incrusté avec des cavités restaurées est alors disponible pour la suite des opérations de dépôt du matériau cathodoluminescent, qui s'effectue selon les méthodes habituelles connues.

On obtient alors une structure d'élément de fibres optiques à cavité restaurée telle que représentée sur la fig. 5. La surface d'attaque 20 est ici volontairement supprimée du dessin pour souligner le fait que le matériau de restauration et le verre de coeur possèdent une continuité optique. Les grains de matériau cathodoluminescent 14 sont disposés dans la cavité restaurée. Le congé 32 très faible assure une perte minimale de lumière à la périphérie de la cavité.

D'autres compositions d'émail possédant un indice optique et une température de ramollissement conformes à l'invention peuvent être utilisés. Il en est ainsi des émaux formés à partir des produits suivants pour des compositions molaires telles que:

PbO: a = 40 à 70% – $SiO_2$: b = 5 à 30% – $Al_2O_3$: c = 0 à 10% – $B_2O_3$: d = 10 à 35% – ZnO: e = 0 à 15% – $Bi_2O_3$: f = 0 à 3%,

chaque mélange devant respecter la condition: a + b + c + d + e + f = 100%.

Selon une seconde variante on utilise un mélange de phosphate d'aluminium et de phosphate de titane. Les proportions peuvent se situer dans des compositions molaires de l'ordre des valeurs suivantes:

Phosphate d'aluminium: 25%

Phosphate de titane: 75%.

Pour préparer ces mélanges et les déposer dans les cavités on opère de la manière suivante. Les produits de départ sont constitués du chlorure d'aluminium et du chlorure de titane purs et anhydres. Pour obtenir la solution qui donne naissance au phosphate d'aluminium on dissout 3,3 grammes de chlorure d'aluminium anhydre pur dans 250 centimètres-cube d'alcool éthylique. Après filtrage la solution est refroidie à la température de 0°C. On ajoute 1,6 centimètres-cube d'acide orthophosphorique et le mélange est maintenu à froid. Il se forme alors progressivement un précipité gélatineux blanchâtre de phosphate d'aluminium que l'on sépare par décantation. Ce précipité est mélangé à 80 centimètres d'alcool méthylique.

On prépare de la même façon la solution correspondant au phosphate de titane. Les deux solutions sont mélangées en proportions requises pour obtenir l'indice optique recherché c'est-à-dire ajusté le mieux possible à celui du verre de coeur. Ainsi pour obtenir un indice optique de 1,9 on mélange 75% de la solution contenant le phosphate de titane à 25% de la solution contenant le phosphate d'aluminium. En intervenant sur la dilution de ce mélange dans l'alcool méthylique on peut ajuster l'épaisseur du revêtement de matériau de restauration. Le mélange liquide ainsi obtenu est versé sur la plaque de fibres optiques que l'on met ensuite dans une enceinte à vide. Les bulles d'air emprisonnées, en particulier dans les cavités, sont ainsi évacuées et lors de la remise à la pression atmosphérique le mélange se trouve forcé à l'intérieur des cavités. La plaque de fibres optiques est alors mise à l'étude vers 200°C à 250°C où le solvant s'évapore, et on obtient une pellicule transparente dure qui peut résister à des températures de l'ordre de 1000°C.

Bien évidemment d'autres matériaux de restauration peuvent être utilisés pour répondre à l'invention. Il en est ainsi de matériaux tels que vernis, matériaux plastiques, polymères, etc...

Cette invention vient d'être décrite plus particulièrement dans le cas d'un tube intensificateur d'images utilisé en vision nocturne. Elle s'applique aux tubes que l'on peut désigner d'une façon générale sous l'appellation tube de visualisation, tel que le tube intensificateur d'images déjà décrit, utilisé, par exemple, en vision nocturne, ou bien un tube à balayage de fente, ou bien un tube convertisseur de rayons X, ou bien un tube à rayons cathodiques permettant la visualisation d'une image, tels que ceux utilisés en oscilloscopie ou en télévision, où, d'une manière générale, tout tube permettant la visualisation à l'aide du bombardement d'un luminophore par des électrons.

## Revendications

1. Ecran cathodoluminescent incrusté (43) comprenant une plaque de fibres optiques formée par la réunion de fibres optiques élémentaires constituées de barreaux de verre de coeur (10) entourés par un ou plusieurs verres d'enrobage (12), la plaque de fibres optiques étant munie de cavités disposées sensiblement perpendiculairement à une de ses faces, les cavités étant obtenues après avoir creusé partiellement un ou plusieurs verres, dont le verre de coeur (10), tout en conservant au moins le verre d'enrobage le plus éloigné du verre de coeur, les surfaces ainsi mises à nu constituant les parois des cavités pour la partie sensiblement parallèle à l'axe des fibres optiques élémentaires, et le fond (20) de ces cavités pour la partie restante, les cavités étant ensuite remplies par un produit cathodoluminescent (14) émettant un flux lumineux sous l'influence d'un bombardement d'électrons, caractérisé en ce que le fond (20) des cavités est recouvert d'un dépôt dun matériau de restauration (30) transparent au flux lumineux, améliorant l'état de surface et la planéité du fond des cavités, et tendant à réduire au maximum le congé (32) à l'intersection entre le fond et la paroi de chaque cavité.

2. Ecran cathodoluminescent incrusté selon la revendication 1, caractérisé en ce que le matériau de restauration possède un indice optique voisin de celui du verre de coeur.

3. Ecran cathodoluminescent incrusté selon l'une des revendications 1 ou 2, caractérisé en ce que le matériau de restauration est un émail à température de ramollissement et de nappage inférieures à la plus faible des températures de ramollissement des verres.

4. Ecran cathodoluminescent incrusté selon l'une des revendications 1 à 3, caractérisé en ce que le matériau de restauration est un émail dont la composition est choisie, en fonction de l'indice optique et des températures de ramollissement et de nappage recherchés, dans la gamme de compositions molaires suivantes:

PbO: $a = 40$ à $70\%$ – $SiO_2$: $b = 5$ à $30\%$ – $Al_2O_3$: $c = 0$ à $10\%$ – $B_2O_3$: $d = 10$ à $35\%$ – $ZnO$: $e = 0$ à $15\%$ – $Bi_2O_3$: $f = 0$ à $3\%$, de telle sorte que l'on ait $a + b + c + d + e + f = 100\%$.

5. Ecran cathodoluminescent incrusté selon la revendication 4, caractérisé en ce que la matériau de restauration est un émail qui présente la composition molaire suivante:

PbO: $60\%$; $B_2O_3$: $25\%$; $SiO_2$: $10\%$; $ZnO$: $4\%$; $Al_2O_3$: $1\%$.

6. Ecran cathodoluminescent incrusté selon l'une des revendications 1 ou 2, caractérisé en ce que le matériau de restauration est un mélange de phosphate d'aluminium et de phosphate de titane.

7. Tube de visualisation caractérisé en ce qu'il comprend un écran cathodoluminescent incrusté selon l'une des revendications 1 à 6.

## Patentansprüche

1. Eingelegter Kathodolumineszenzschirm (43) mit einer Optikfaserplatte, gebildet durch die Zusammenführung von Elementar-Optikfasern, die aus Kernglasstäben (10) bestehen, die von einem oder mehreren Umhüllungsgläsern (12) umgeben sind, wobei die Optikfaserplatte mit Höhlungen versehen ist, die im wesentlichen senkrecht zu einer ihrer Flächen verlaufen, wobei die Höhlungen nach teilweisem Aushöhlen eines oder mehrerer Gläser unter Einschliessung des Kernglases (19) erhalten werden, wobei gleichzeitig wenigstens das weitest vom Kernglas entfernte Umhüllungsglas erhalten bleibt, wobei die auf derartige Weise bearbeiteten Oberflächen die Wände der Höhlungen für den im wesentlichen parallel zur Achse der Elementaroptikfasern verlaufenden Teil und den Boden (20) dieser Höhlungen für den restlichen Teil bilden, wobei die Höhlungen anschliessend mit einem Kathodolumineszenz-Produkt (14) gefüllt werden, das unter dem Einfluss eines Elektronenbeschusses einen Lichtstrom aussendet, dadurch gekennzeichnet, dass der Boden (20) der Höhlungen mit einem Niederschlag eines für den Lichtbogen transparenten Verstärkungsmaterials (30) bedeckt ist, das den Oberflächenzustand und die Flachheit des Bodens der Höhlungen verbessert und dient zur Reduzierung der Hohlkehle (32) an der Schnittstelle zwischen dem Boden und der Wand jeder Höhlung.

2. Eingelegter Kathodolumineszenzschirm nach Anspruch 1, dadurch gekennzeichnet, dass das Verstärkungsmaterial einen optischen Index nahe bei dem des Kernglases besitzt.

3. Eingelegter Kathodolumineszenzschirm nach einem der Ansprüche 1 oder 2, dadurch gekennzeichnet, dass das Verstärkungsmaterial ein Email ist, dessen Erweichungs- und Beschichtungstemperatur niedriger als die niedrigste Erweichungstemperatur des Glases ist.

4. Eingelegter Kathodolumineszenzschirm nach einem der Ansprüche 1 bis 3, dadurch gekennzeichnet, dass das Verstärkungsmaterial ein Email ist, dessen Zusammenstellung abhängig vom optischen Index und von den gewünschten Erweichungs- und Beschichtungstemperaturen im Bereich nachstehender Molarzusammensetzungen gewählt wird:

PbO: $a = 40$ bis $70\%$ – $SiO_2$: $b = 5$ bis $30\%$ – $Al_2O_3$: $c = 0$ bis $10\%$ – $B_2O_3$: $d = 10$ bis $35\%$ – $ZnO$: $e = 0$ bis $15\%$ – $Bi_2O_3$: $f = 0$ bis $3\%$, auf solche Weise, dass $a + b + c + d + e + f = 100\%$ beträgt.

5. Eingelegter Kathodolumineszenzschirm nach Anspruch 4, dadurch gekennzeichnet, dass das Verstärkungsmaterial ein Email mit folgender Molarzusammensetzung ist:

PbO: $60\%$; $B_2O_3$: $25\%$; $SiO_2$: $10\%$; $ZnO$: $4\%$; $Al_2O_3$: $1\%$.

6. Eingelegter Kathodolumineszenzschirm nach einem der Ansprüche 1 oder 2, dadurch gekennzeichnet, dass das Verstärkungsmaterial eine Mischung aus Alumniumphosphat und Titanphosphat ist.

7. Bildwiedergaberöhre, dadurch gekennzeichnet, dass sie einen eingelegten Kathodolumineszenzschirm nach einem der Ansprüche 1 bis 6 enthält.

## Claims

1. An intagliated electroluminescent screen (43) comprising an optical fibre plate formed by the reunion of elementary optical fibres constituted by bars of core glass (10) surrounded by one or several cladding glasses (12), the optical fibre plate being provided with cavities disposed substantially perpendicularly to one of its faces, the cavities being obtained after having partially hollowed out one or several glasses, including the core glass (10), while preserving at least the cladding glass farthest remote from the core glass, the surfaces thus exposed constituting the walls of the cavities for the part substantially parallel to the axis of the elementary optical fibres, and the bottom (20) of said cavities for the remaining part, the cavities being then filled by an electroluminescent product (14) emitting a luminous flux under the influence of an electron bombardment, characterized in that the bottom (20) of the cavities is covered by a deposit of a restoring material (30) which is transparent to the luminous flux improving the surface state and the flatness of the bottom of the cavities, and tending to minimize the fillet (32) at the intersection between the bottom and the wall of each cavity.

2. An intagliated electroluminescent screen as claimed in claim 1, characterized in that the restoring material has an optical index close to that of the core glass.

3. An intagliated electroluminescent screen as claimed in any of the claims 1 or 2, characterized in that the restoring material is an enamel having a softening and coating temperature lower than the lowest softening temperature of the glasses.

4. An intagliated electroluminescent screen as claimed in any of the claims 1 to 3, characterized in that the restoring material is an enamel of which the composition is chosen, as a function of the optical index and desired softening and coating temperatures in the range of the following molar compositions:

PbO: $a = 40$ to $70\%$ – $SiO_2$: $b = 5$ to $30\%$ – $Al_2O_3$: $c = 0$ to $10\%$ – $B_2O_3$: $d = 10$ to $35\%$ – $ZnO$: $e = 0$ to $15\%$ – $Bi_2O_3$: $f = 0$ to $3\%$, in such a manner that $a + b + c + d + e + f = 100\%$.

5. An intagliated electroluminescent screen as claimed in claim 4, characterized in that the restoring material is an enamel which has the following molar composition:

PbO: $60\%$; $B_2O_3$: $25\%$; $SiO_2$: $10\%$; $ZnO$: $4\%$; $Al_2O_3$: $1\%$.

6. An intagliated electroluminescent screen as claimed in any of the claims 1 or 2, characterized in that the restoring material is a mixture of aluminium phosphate and titanium phosphate.

7. A display tube characterized in that it comprises an intagliated electroluminescent screen as claimed in any of the claims 1 to 6.

FIG.1

FIG.2

FIG.3

FIG.4

FIG.5